Europäisches Patentamt

European Patent Office

Office européen des brevets

(19)

(11) Numéro de publication: **0 1 2 3 6 1 5**
**B1**

(12) **FASCICULE DE BREVET EUROPEEN**

(45) Date de publication du fascicule du brevet:
**19.11.87**

(21) Numéro de dépôt: **84400770.8**

(22) Date de dépôt: **18.04.84**

(51) Int. Cl.⁴: **B 02 C 18/44**, B 02 C 18/16

(54) Machine de broyage de produits de récupération de faible encombrement.

(30) Priorité: **20.04.83 FR 8306526**

(43) Date de publication de la demande:
**31.10.84 Bulletin 84/44**

(45) Mention de la délivrance du brevet:
**19.11.87 Bulletin 87/47**

(84) Etats contractants désignés:
**AT BE CH DE GB IT LI NL SE**

(56) Documents cités:
**CH - A - 384 337**
**FR - A - 1 107 079**
**FR - A - 1 548 895**

(73) Titulaire: **COMPAGNIE CLAYTON Société dite:,**
**232 Chaussée Jules César, F-95250 Beauchamp (FR)**

(72) Inventeur: **Thieux, Jean, 5, Allée des Hauts Dimanches,**
**F-78430 Louveciennes (FR)**

(74) Mandataire: **Rodhain, Claude et al, Cabinet Claude**
**Rodhain 30, rue la Boétie, F-75008 Paris (FR)**

ACTORUM AG

## Description

L'invention concerne les machines de broyage de produits de récupération, notamment de résidus de matière plastique. Ces appareils sont constitués d'un socle, d'un corps de broyeur muni de contre-lames et supporté par ledit socle, et d'un rotor muni de lames de coupe et monté à rotation dans ledit corps. Cette machine reçoit les produits à broyer par l'intermédiaire d'une goulotte d'alimentation et les produits obtenus passent à travers une grille de calibrage et tombent dans une goulotte d'évacuation qui est reliée à un dispositif d'évacuation tel qu'une conduite reliée à un aspirateur.

Du fait des conditions difficiles de leur fonctionnement et de la qualité des matériaux broyés, il est nécessaire de procéder fréquemment au nettoyage et à l'entretien de ces machines; pour cela, il faut pouvoir accéder facilement à la grille de calibrage et aux lames et contre-lames qui doivent être réglées et changées fréquemment.

Généralement, le corps comporte un capot supérieur portant la goulotte d'alimentation et une partie inférieure formant support de grille, ces deux éléments étant montés à pivotement autour d'un axe parallèle à l'axe du rotor de manière à permettre l'accès à l'intérieur du corps en vue du nettoyage et de l'entretien. Cette disposition augmente notablement l'encombrement de la machine de broyage, ce qui est particulièrement gênant lorsque la machine de broyage est utilisée en combinaison avec des machines à mouler. Par ailleurs, la partie inférieure du corps est très proche du sol, ce qui entraîne des mauvaises conditions de travail, et par suite, une augmentation du temps nécessaire pour l'entretien et le nettoyage.

Le brevet suisse 384 337 décrit une machine destinée au concassage de cailloux ou de pierres, ce concassage s'effectuant par chocs sur des marteaux en rotation. Ce concasseur comprend un crible à tambour et un moyeu muni de marteaux qui tournent en sens contraire lors du fonctionnement de cette machine. L'utilisation d'une telle structure dans une machine de broyage du type décrit plus haut ne permet pas d'obtenir un accès facile à l'intérieur du corps de la machine en vue de son nettoyage et de son entretien.

La présente invention a pour objet une machine de broyage du type précité dont l'encombrement est notablement réduit à capacité égale et dont le nettoyage et l'entretien peuvent être facilement réalisés.

La machine de broyage selon l'invention est notamment remarquable en ce que le corps peut tourner autour de l'axe de rotation du rotor entre une première position de fonctionnement où le corps est verrouillé par rapport au socle, et une deuxième position où le corps est pivoté par rapport au socle pour l'entretien et le nettoyage.

Du fait de la possibilité de faire tourner le corps dans son ensemble par rapport à l'axe du rotor, on peut accéder par le dessus à toutes les parties du rotor, ce qui facilite grandement les opérations d'entretien et de nettoyage. Par ailleurs, il n'y a plus de partie pivotante s'ouvrant vers le bas comme c'était le cas du support de la grille de calibrage et cela permet de réduire notablement l'encombrement de la machine, en particulier en hauteur.

Selon une autre caractéristique de l'invention, la partie inférieure du corps de la machine de broyage est disposée à articulation selon un axe qui est parallèle à l'axe de rotation du rotor et qui est disposé à proximité de celui-ci. En effet, du fait de la possibilité de rotation du corps en entier, il n'est plus nécessaire de disposer l'axe de rotation du support de grille à une grande distance du rotor et cela permet d'avoir une plus grande ouverture de la partie inférieure du corps qui porte la grille, en réduisant l'encombrement.

Selon encore une autre caractéristique de l'invention, la machine de broyage comporte un dispositif de verrouillage du corps par rapport au socle.

D'autres caractéristiques et avantages de l'invention ressortiront de la description qui va suivre, faite à titre illustratif en se référant aux dessins ci-annexés et sur lesquels:

– la Fig. 1 est une vue en coupe d'une machine de broyage conforme à la présente invention;

– la Fig. 2 est une coupe suivant la ligne II–II de la Fig. 1;

– la Fig. 3 est une coupe analogue à celle de la Fig. 2 après rotation du corps de la machine; et,

– la Fig. 4 est une vue schématique analogue à la Fig. 3, la partie inférieure articulée du corps étant ouverte.

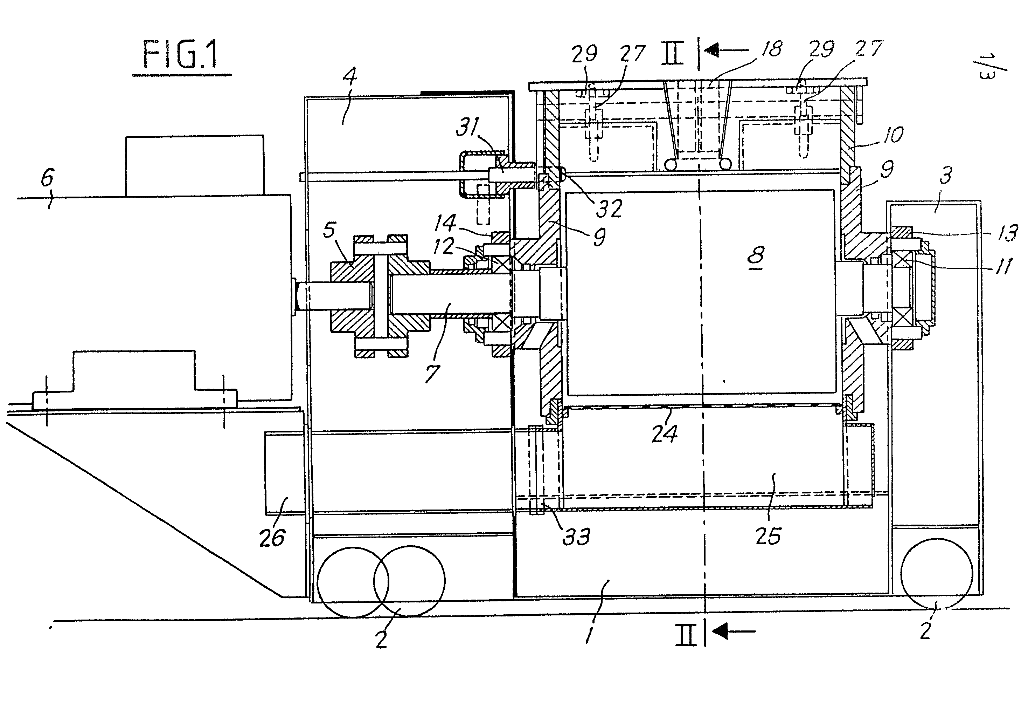

La machine de broyage représentée sur les fig. 1 à 4 comporte un socle 1 monté sur des roulettes 2 et comportant essentiellement deux montants ou flasques verticaux 3 et 4; le montant 4 contient un dispositif d'accouplement 5 à un moteur d'entraînement direct 6 qui entraîne l'axe 7 d'un rotor à axe horizontal 8 tournant dans un corps désigné dans son ensemble par la référence 10.

Conformément à l'invention, l'arbre 7 du rotor 8 est supporté par des roulements 11 et 12 supportés respectivement par des boitiers 9 sur les montants 3 et 4.

Par ailleurs, les boîtiers 9 sont montés à rotation autour du même axe que le rotor 8 dans le socle 1 par l'intermédiaire de paliers lisses 13 et 14. Il en résulte que le rotor 8 et le corps 10 peuvent tourner par rapport au socle 1 de manière coaxiale et indépendante.

Le corps 10 comporte essentiellement une partie supérieure fixe 15 sur laquelle sont fixées les contre-lames 16 qui coopèrent avec les lames mobiles fixées sur le rotor (non représentées) dont la trajectoire est représentée par le cercle 17. Cette partie supérieure fixe comporte la goulotte d'alimentation 18. Dans l'exemple représenté, qui est celui d'une machine de récupération de purges chaudes, la partie supérieure 15 comporte une autre ouverture 19 servant à l'introduction de l'air pour obtenir un effet de turbine, cette entrée d'air 19 étant protégée contre l'obstruction des matières à broyer au moyen d'une chicane 21.

Le corps 10 comporte une partie inférieure articulée 22 qui est mobile en rotation autour d'un axe 23, parallèle à l'axe 7 du rotor et disposé relativement près de ce dernier. Cette partie inférieure mobile sert de support à la grille de calibrage 24 qui débouche dans une goulotte d'évacuation 25 de forme circulaire qui est reliée à une conduite d'évacuation 26 fixée dans le montant 4 du socle 1 et qui est, par exemple, reliée à un dispositif aspirateur non représenté.

La partie inférieure articulée 22 est verrouillée sur la partie fixe supérieure 15 au moyen de deux crochets 27 articulés sur un axe 28 solidaire de la partie inférieure mobile 22 et coopérant avec une tige 29 solidaire de la partie supérieure fixe 15.

Par ailleurs, le corps 10 est verrouillé par rapport au socle 1 dans sa position de fonctionnement au moyen d'un dispositif de verrouillage constitué par une tige 31 fixée à coulissement parallèlement à l'axe 7 du rotor dans le montant 4 du socle 1 et coopérant avec un trou 32 aménagé dans le corps 10.

Les boîtiers 9, servant au mouvement de rotation du corps 10 par rapport aux montants 3 et 4 du socle 1, n'ont pas à supporter de contraintes importantes puisque cette rotation s'effectue à la main et à faible vitesse et ils peuvent donc comporter de simples paliers lisses 13 et 14.

La goulotte d'évacuation 25 et la conduite d'évacuation 26 sont reliées de manière étanche pour éviter au maximum les pertes de charge du dispositif d'aspiration associé à la conduite 26. Il est intéressant que cette liaison étanche soit réalisée de manière à être facilement amovible puisque, lors de la rotation du corps 10, la goulotte 25 et la conduite 26 doivent être dissociées. Avantageusement, cette étanchéité est réalisée au moyen de deux demi-brides 33 et 34 s'étendant chacune sur une demi-circonférence autour de la zone de jonction de la goulotte 25 et de la conduite 26. La première demi-bride 33 est fixée sur l'extrémité de la conduite 26 et la deuxième demi-bride 34 est fixée sur l'extrémité de la goulotte d'évacuation 25. De cette manière, lorsque la goulotte 25 et la conduite 26 sont disposées en alignement dans la position de fonctionnement de la machine, les deux demi-brides 33 et 34 constituent une bride complète qui assure l'étanchéité de la zone de jonction de la goulotte 25 et de la conduite 26.

Le mouvement de rotation du corps 10 sur le socle 1 s'effectue grâce aux deux boîtiers 9, disposés chacun à une extrémité du corps 10, l'un du coté du montant 3 et l'autre du côté du montant 4; ces deux boîtiers sont solidaires du corps 10 et reliés aux montants 3 et 4 par l'intermédiaire des paliers lisses 13 et 14. L'arbre 7 du rotor 8 tourne librement dans les roulements 11 et 12 montés dans les boîtiers 9.

Le fonctionnement de la machine de broyage qui vient d'être décrit est le suivant. En position de fonctionnement, la tige 31 est engagée dans le trou 32, ce qui solidarise le corps 10 du socle 1 et les crochets 27 sont engagés sur les tiges 29 et bloqués sur ces dernières par un mouvement à dépassement de point mort autour de l'axe 28.

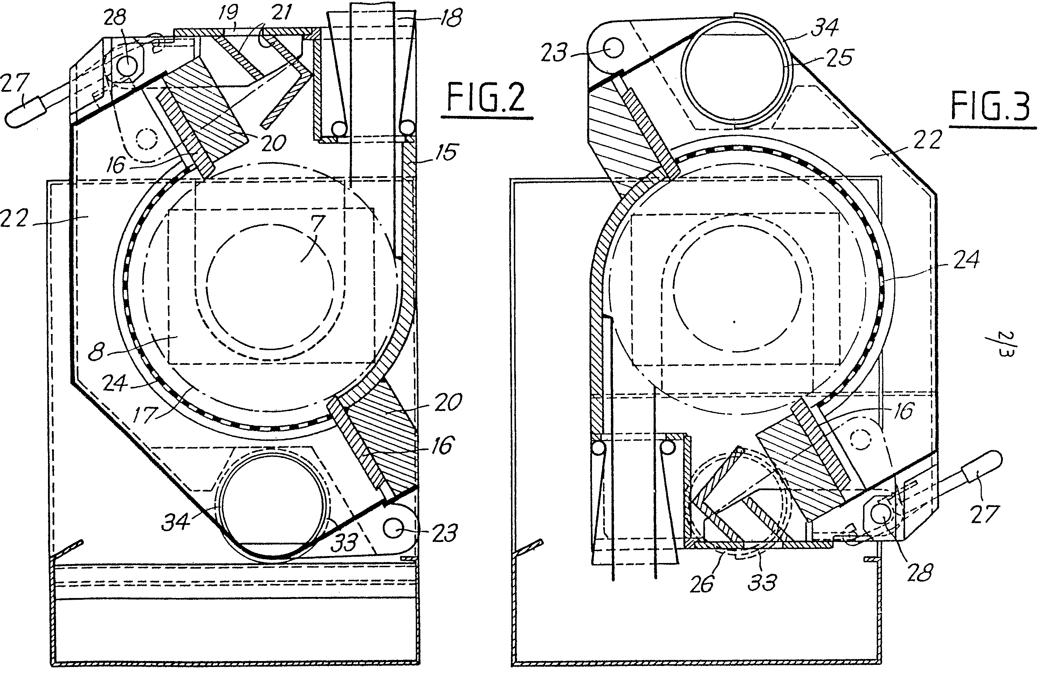

Lorsque l'on désire procéder à un entretien ou à un nettoyage de la machine de broyage, on arrête cette dernière et on dégage la tige 31 du trou 32 afin de permettre la rotation du corps 10 par rapport au socle 1. Le corps se trouve alors dans la position représentée à la fig. 3, la goulotte 25 et la conduite 26 étant désolidarisées après avoir effectué une rotation correspondant par exemple à 180°.

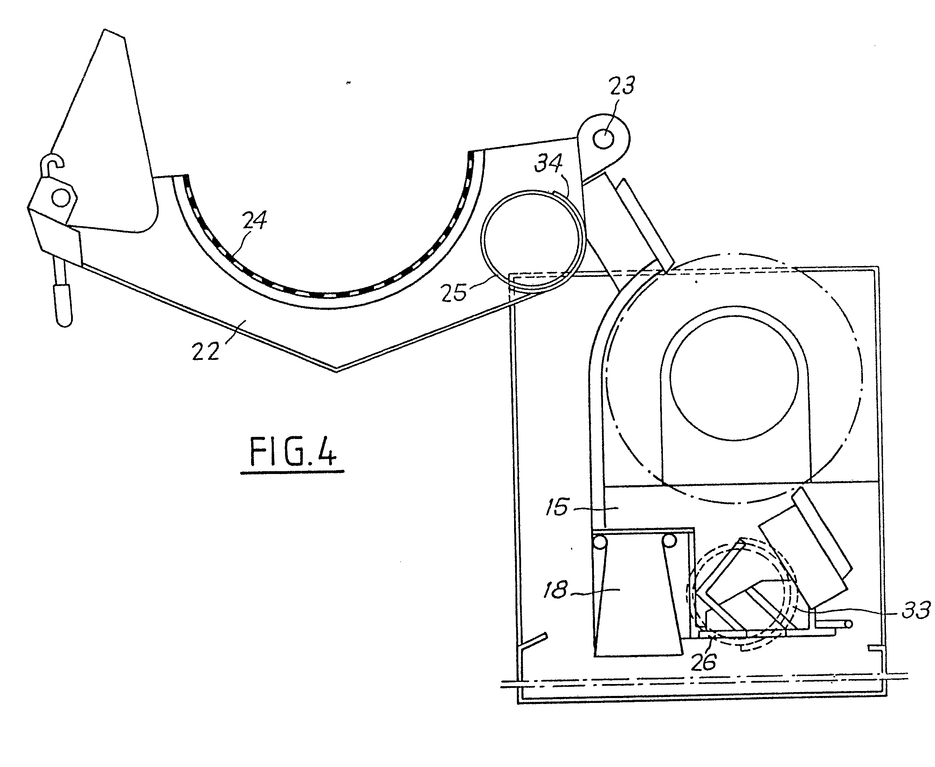

Il est alors possible de déverrouiller les crochets 27 et d'ouvrir la partie inférieure articulée 22, comme représenté sur la fig. 4. On se rend compte que l'on peut avoir un accès facile autant à la grille de calibrage qu'à l'intérieur du corps, par exemple pour l'inspection et le changement des contre-lames 16 et des lames du rotor. L'opérateur effectuant ces opérations est debout et il peut donc effectuer rapidement ces dernières.

On voit que l'invention permet d'obtenir une très grande accessibilité aux différents organes actifs de la machine de broyage en vue de leur nettoyage et de leur entretien. La partie inférieure articulée s'étendant sur pratiquement un demi-cercle du corps 10, il est possible de disposer les contre-lames 16 dans une position quelconque en position de fonctionnement; ainsi, dans l'exemple représenté, les contre-lames 16 sont disposées dans un plan faiblement incliné par rapport à la verticale alors qu'elles sont généralement disposées dans un plan horizontal dans les machines de broyage classiques.

Dans le broyeur selon l'invention, on accède à toutes les parties utiles (grille, lames du rotor et contre-lames) simultanément par l'ouverture de la partie mobile 22 alors que dans les machines classiques il est nécessaire de prévoir deux parties ouvrantes.

Par ailleurs, la disposition des contre-lames dans la zone de raccordement de la partie fixe à la partie mobile permet d'augmenter la surface de la grille. En effet, dans les machines connues actuellement, les contre-lames sont accessibles par le capot supérieur et les appuis de lames 20 sur lesquels sont fixées ces dernières sont disposés en dessous des lames. Dans la machine selon l'invention, les appuis de lames peuvent être disposés au-dessus des lames, ce qui permet d'augmenter la surface de la grille de l'épaisseur des deux appuis de lames.

La description ci-dessus n'a été fournie qu'à titre illustratif et nullement limitatif et il est évident que l'on peut y apporter des modifications ou variantes sans pour autant sortir du cadre de la présente invention. En particulier l'invention a été décrite en application à une machine de broyage particulière de récupération de purges chaudes, mais il est évident que l'invention s'applique à toutes les machines de broyage de produits de récupération.

## Revendications

1. Machine de broyage de produits de récupération, notamment de résidus de matière plastique, comportant un socle (1), un corps de broyeur (10) muni de contre-lames (16) et supporté par ledit socle, et un rotor (8) muni de lames de coupe et monté à rotation dans ledit corps (10), caractérisée en ce que le corps (10) peut tourner autour de l'axe de rotation du rotor (8) entre une première position de fonctionnement où le corps (10) est verrouillé par rapport au socle (1) et une deuxième position où le corps (10) est pivoté par rapport au socle (1) pour l'entretien et le nettoyage.

2. Machine de broyage selon la revendication 1, caractérisée en ce que deux boîtiers (9) solidaires du corps (10) sont reliés au socle (1) par l'intermédiaire de paliers (13, 14).

3. Machine de broyage selon la revendication 2, caractérisée en ce que l'arbre (7) du rotor (8) tourne librement dans des roulements (11, 12) montés dans le boîtier (9).

4. Machine de broyage selon l'une quelconque des revendications précédentes, caractérisée en ce que le corps (10) comporte une partie inférieure (22) disposée à articulation selon un axe (23) qui est parallèle à l'axe de rotation (7) du rotor (8) et qui est disposé à proximité du rotor (8).

5. Machine de broyage selon la revendication 4, caractérisée en ce que les contre-lames (16) sont placées sur la partie fixe (15) dans la zone de raccordement avec la partie inférieure mobile (22), les appuis des contre-lames (16) étant opposés à la grille (24) par rapport aux contre-lames (16).

6. Machine de broyage selon la revendication 4, caractérisée en ce que la partie inférieure (22) articulée du corps (10) correspond environ à un demi-cercle du corps (10).

7. Machine de broyage selon la revendication 4, caractérisée en ce que le corps (10) comporte un dispositif de verrouillage (27, 28, 29) en position fermée de la partie inférieure articulée (22).

8. Machine de broyage selon l'une quelconque des revendications précédentes, caractérisée en ce que la goulotte d'évacuation (25) aménagée dans la partie inférieure (22) du corps est raccordée de manière étanche et facilement amovible à une conduite d'évacuation (26) reliée à un dispositif d'aspiration.

9. Machine de broyage selon la revendication 8, caractérisée en ce que les extrémités de raccordement de la goulotte d'évacuation (25) et de la conduite d'évacuation (26) comportent chacune une demi-bride (33–34), les deux demi-brides (33, 34) formant une bride complète assurant l'étanchéité lorsque le corps (10) est en position de fonctionnement.

10. Machine de broyage selon l'une quelconque des revendications précédentes, caractérisée en ce qu'elle comporte un dispositif de verrouillage (31, 32) du corps (10) par rapport au socle (1).

## Patentansprüche

1. Zerkleinerungsmaschine für Verwertungsprodukte, insbesondere für Kunststoffabfälle, mit einem Sockel (1), einem Zerkleinerungsmaschinen-Körper (10), der mit Gegenschneiden (16) versehen und vom Sockel gestützt ist, und mit einem Rotor (8), der mit Schneiden versehen und drehbar im Körper (10) gelagert ist, dadurch gekennzeichnet, dass der Körper (10) um die Drehachse des Rotors (8) zwischen einer ersten Betriebsstellung, in welcher der Körper (10) bezüglich des Sockels (1) verriegelt ist und einer zweiten Stellung, in welcher der Körper (10) bezüglich des Sockels (1) verschwenkt ist, zur Wartung und Reinigung verdreht werden kann.

2. Zerkleinerungsmaschine nach Anspruch 1, dadurch gekennzeichnet, dass zwei mit dem Körper einstückige Halslager (9) über Radiallager (13, 14) mit dem Sockel (1) verbunden sind.

3. Zerkleinerungsmaschine nach Anspruch 2, dadurch gekennzeichnet, dass die Welle (7) des Rotors (8) frei in Wälzlagern (11, 12) drehbar ist, die im Halslager (9) angeordnet sind.

4. Zerkleinerungsmaschine nach einem der vorstehenden Ansprüche, dadurch gekennzeichnet, dass der Körper (10) einen unteren Bereich (22) umfasst, welcher um eine Achse (23) schwenkbar ausgelegt ist, die der Drehachse (7) des Rotors (8) parallel ist und nahe dem Rotor (8) angeordnet ist.

5. Zerkleinerungsmaschine nach Anspruch 4, dadurch gekennzeichnet, dass die Gegenschneiden (16) an einem festen Abschnitt (15) im Verbindungsbereich mit dem beweglichen unteren Bereich angeordnet sind, wobei die Abstützungen der Gegenschneiden (16) dem Rost (24) bezüglich der Gegenschneiden (16) gegenüberliegen.

6. Zerkleinerungsmaschine nach Anspruch 4, dadurch gekennzeichnet, dass der schwenkbare untere Bereich (22) des Körpers (10) ungefähr einem Halbkreis des Körpers (10) entspricht.

7. Zerkleinerungsmaschine nach Anspruch 4, dadurch gekennzeichnet, dass der Körper (10) eine Verriegelungsvorrichtung (27, 28, 29) in der Schliessstellung des schwenkbaren unteren Bereichs (22) aufweist.

8. Zerkleinerungsmaschine nach einem der vorstehenden Ansprüche, dadurch gekennzeichnet, dass die Entleerungsrutsche (25), die im unteren Bereich (22) des Körpers angeordnet ist, in dichter und leichter abnehmbarer Weise mit einer Entleerungsleitung (26) verbunden ist, die an eine Ansaugvorrichtung angeschlossen ist.

9. Zerkleinerungsmaschine nach Anspruch 8, dadurch gekennzeichnet, dass die Verbindungsenden der Entleerungsrutsche (25) und der Entleerungsleitung (26) jeweils einen Halbflansch (33–34) aufweisen, wobei die beiden Halbflansche (33, 34) einen vollständigen Flansch bilden, der die Dichtigkeit gewährleistet, wenn sich der Körper (10) in Betriebsstellung befindet.

10. Zerkleinerungsmaschine nach einem der vorstehenden Ansprüche, dadurch gekennzeichnet, dass sie eine Verriegelungsvorrichtung (31, 32) des Körpers (10) bezüglich des Sockels (1) umfasst.

## Claims

1. A grinding machine for recovery products, in particular plastics residues, comprising a base (1), a grinding body (10) provided with counterblades (16) and supported by the said base (1), and a rotor (8) provided with cutter blades and mounted so as to rotate in the said body (10), characterised in that the body (1) can turn about the rotary axis of the rotor (8) between a first operating position where the body (10) is locked relative to the base (1) and a second position where the body (10) is pivoted relative to the base (1) for maintenance and cleaning.

2. A grinding machine according to claim 1, characterised in that two journals (9) rigid with the body (1) are connected to the base (1) by means of bearings (13, 14).

3. A grinding machine according to claim 2, characterised in that the shaft (7) of the rotor (8) rotates freely in rolling bearings (11, 12) mounted in the journal (9).

4. A grinding machine according to any one of the preceding claims, characterised in that the body comprises a lower portion (22) disposed so as to pivot about a shaft (23) which is parallel to the rotary axis (7) of the rotor and which is disposed in the vicinity of the rotor (8).

5. A grinding machine according to claim 4, characterised in that the counter-blades (16) are mounted on the fixed portion (15) in the junction region with the lower movable portion (22), the supports of the counter-blades (16) being opposite the screen (24) relative to the counter-blades (16).

6. A grinding machine according to claim 4, characterised in that the pivoted lower portion (22) of the body (1) corresponds approximately to a semicircle of the body (10).

7. A grinding machine according to claim 4, characterised in that the body (10) comprises a device (27, 28, 29) for locking the pivoted lower portion (22) in the closed position.

8. A grinding machine according to anyone of the preceding claims, characterised in that the discharge channel (25) formed in the lower portion (22) of the body is linked in a sealing-tight and easily movable manner to a discharge line (26) connected to a suction device.

9. A grinding machine according to claim 8, characterised in that the connection ends of the discharge chute (26) each comprise a half-collar (33, 34), the two half-collars (33, 34) forming a complete collar ensuring sealing tightness when the body (10) is in the operating position.

10. A grinding machine according to anyone of the preceding claims, characterised in that it comprises alocking device (31, 32) fot the body (10) relative to the base (1).

FIG.1

0 123 615

FIG.2

FIG.3

FIG.4